# EUROPÄISCHE PATENTSCHRIFT

(11) **EP 2 252 446 B1**
(45) Veröffentlichungstag und Bekanntmachung des Hinweises auf die Patenterteilung: **28.08.2013**
(21) Anmeldenummer: 09712304.6
(22) Anmeldetag: 20.02.2009
(51) Int. Cl.: B29C 45/02, B29C 45/56

(54) **KOMPRESSIONSSPRITZGIESS-VERFAHREN UND -VORRICHTUNG FÜR PREFORMEN**
COMPRESSION INJECTION MOULDING METHOD AND DEVICE FOR PREFORMS
PROCÉDÉ ET DISPOSITIF DE MOULAGE PAR INJECTION-COMPRESSION DE PRÉFORMES

(30) Priorität: 21.02.2008 CH 2482008; 22.04.2008 CH 6362008
(43) Veröffentlichungstag der Anmeldung: 24.11.2010
(73) Patentinhaber: Netstal-Maschinen AG, 8752 Näfels (CH)
(72) Erfinder: BOCK, Stefan, CH-8750 Glarus (CH)
(74) Vertreter: Wilhelm, Ludwig
(86) Internationale Anmeldenummer: PCT/EP2009/052062
(87) Internationale Veröffentlichungsnummer: WO 2009/103800

(56) Entgegenhaltungen:
- WO-A-2005/018905
- US-A- 5 662 856
- US-A1- 2008 265 466

## Beschreibung

### Technisches Gebiet

Die Erfindung betrifft ein Kompressionsspritzgiess-Verfahren für Preformen mittels einer Spritzgiessmaschine, einer beweglichen und einer feststehenden Werkzeugträgerplatte und einem Werkzeug mit einer Vielzahl von Formnestern bzw. Kavitäten, wobei die bewegliche Formhälfte mit Kernen ausgebildet ist und die Schmelze auf der Seite der feststehenden Werkzeugträgerplatte über gesteuerte Ventile dosiert in die Kavitäten eingebracht wird.

Die Erfindung betrifft ferner eine Vorrichtung zum Kompressionsspritzgiessen für Preformen mittels einer Spritzgiessmaschine mit einer beweglichen und einer feststehenden Werkzeugträgerplatte und einem Werkzeug mit einer Vielzahl von Formnestern bzw. Kavitäten, wobei die bewegliche Formhälfte mit Kernen ausgebildet ist und die Schmelze auf der Seite der feststehenden Werkzeugträgerplatte über gesteuerte Ventile dosiert in die Kavitäten eingebracht wird.

### Stand der Technik

Bei der Herstellung von flachen Platten, insbesondere von CD's, ist das Kompressionsspritzgiessen eine Voraussetzung. Dabei wird die Schmelze über die eine Formhälfte zu einem Zeitpunkt, in dem die Form schon teilweise geschlossen ist, mit relativ geringem Druck in die Kavität geführt. Die Kavität wird dabei nur teilweise mit Schmelze gefüllt. Sobald die dosiert zugeführte Schmelzemenge eingebracht ist, wird die bewegliche Formhälfte auf die feststehende Formhälfte zubewegt und durch Verkleinerung der Kavität diese ausgefüllt und dann der sogenannte Prägedruck aufgebracht.

Die Herstellung von Preformen ist insofern problematischer, als es sich dabei um eine Hohlform mit beachtlicher Längenabmessung handelt. In der industriellen Praxis werden Preformen mehrheitlich im klassischen Spritzgiessverfahren mit einer Spritzgiessmaschine mit horizontaler Axe hergestellt. Es wird dazu beispielsweise auf die WO 2004 / 073953 der Anmelderin Bezug genommen. Dabei wird das Rohmaterial in Granulatform über einen Trichter einer Plastifiziereinheit zugeführt und aufbereitet. Im Spritzzyklus wird ein Ventil zwischen der Plastifizierschnecke sowie einem Einspritzkolben geöffnet und dosiert in ein dem Einspritzkolben vorgelagertes Schmelzedepot überführt. Nach Schliessen der Formhälften und Öffnen des Ventils wird die Schmelze schussweise über Heisskanal-Düsen in die einzelnen Kavitäten der Spritzform eingespritzt. Der Einspritzkolben erzeugt über die erforderliche Zeit einen genügenden hydraulischen Nachdruck. Die Preform wird rasch abgekühlt. Nach beispielsweise 14 Sekunden werden die Formhälften durch Rückzug der Kernseite des Werkzeuges und der entsprechenden beweglichen Formhälfte geöffnet und die Preformen den offenen Formhälften entnommen. Die entsprechende Technik hat heute einen hohen Stand erreicht, sodass bis zu 200 Preformen mit höchsten Qualitäten in kurzen Zykluszeiten produzierbar sind.

Das sogenannte Kompressionsspritzgiessen ist zumindest für das Herstellen von dünnwandigen Formen schon seit über zwei Jahrzehnten bekannt. Die JP-620 90 210 schlägt dafür eine senkrecht stehende Presse vor. In die noch offenen Formhälften wird eine Portion aufbereitete Schmelze eingelegt, und danach werden die Formhälften in Bezug auf die äusseren Konturen der Form geschlossen. Als Folgeschritt fährt ein Presskolben, der mit der ergänzenden Bodenform des Behälters ausgebildet ist, mit entsprechendem Kompressionsdruck ein und gibt den Spritzteilen die definitive Form.

Die EP 567 870 zeigt eine hydraulische Presse für das Herstellen von Kunststoffteilen im Kompressionsverfahren. Auch hier ist die Maschinenaxe bzw. die Bewegungsrichtung der bewegbaren Formhälfte senkrecht. Es wird jeweils eine dosierte Portion Schmelze in die offene untere Formhälfte eingelegt und durch Schliessen der Formen die exakte Teileform hergestellt. Über entsprechende Kontrollmittel kann die Schliessbewegung bzw. der Geschwindigkeitsverlauf der oberen Formhälfte gesteuert werden.

Die JP 202 21 0808 schlägt vor, mit einem analogen Konzept Preformen herzustellen. Im Unterschied zu den vorgenannten Lösungen wird hier flüssige Schmelze dosiert in die offene Kavität eingegeben. Danach wird der Kern, der das Innere der Preform erzeugt, mitsamt der offenen Formhälfte senkrecht eingefahren und gleichzeitig die Form geschlossen. Die Schmelzemenge ist so gross gewählt, dass bei geschlossenen Formhälften die Kavitäten vollständig gefüllt sind. Es ist der Anmelderin nicht bekannt, ob diese Lösung je in die Praxis umgesetzt werden konnte.

Die JP 2001 000 219518 ist eine weitere Lösung für eine automatisierte Herstellung von Preformen. Hier wird der Kern vor Einbringen der flüssigen Schmelze in aufrecht stehenden Kavitäten eingefahren. Danach wird die Schmelze über eine ventilgesteuerte Spritzdüse von unten dosiert in die Kavität eingebracht, der Kern mit der beweglichen Formhälfte vollständig eingefahren, gleichzeitig die Form geschlossen und der Kompressionsdruck aufgebracht. Die exakte Dosiermenge kann durch Ausgleichsströmungen zwischen der Kavität und dem Ventilnadelvorraum eingestellt werden.

Die Patentschriften GB 2 430 642 und GB 2 430 643 zeigen zwei weitere Lösungen für das Kompressionsspritzgiessen von Preformen. Dabei bewegt sich ein Spritzdom horizontal in Richtung der Kavität. Die heisse Schmelze wird auf der Seite der festen Formhälfte über ein durch ein steuerbares Einspritzventil entsprechend dem Spritzzyklus in die Kavität eingebracht. Die Lösung geht aus von mehreren Platten, welche zur offenen Seite der Kavitäten bewegbar sind. Es wird eine bewegliche Platte mit den Kernen sowie eine relativ zur Platte mit den Kernen verschiebbare Platte mit Neckringen vorgeschlagen. Die Platte mit den Kavitäten ist mit einem Dichtkontakt zu einem zylindrischen äusseren Abschnitt der Kerne ausgebildet. Als Lösung wird vorgeschlagen, Mittel vorzusehen, mit denen die relative Geschwindigkeit zwischen Kernen und Kavitäten in der Phase, in der der Kern sich der Kavität nähert, als eine Funktion der Distanz zwischen Kernen und Kavitäten eingestellt werden kann. Es wird davon ausgegangen, dass es nicht genügt, wenn nur der Druck reguliert wird. Während der Einspritzphase können die Kerne durch den Einspritzdruck zurückgeschoben werden. Nachteilig bei dieser Lösung ist der aufwendige Aufbau mit mehreren bewegbaren Platten, wobei das Konzept nur für eine geringe Anzahl Kavitäten geeignet ist. In der GB-Patentschrift 2 430 642 wird eine unabhängig der Kerne bewegbare Verschlussplatte vorgeschlagen. Die Verschlussplatte erlaubt, die Kerne relativ zu den Kavitäten zu bewegen.

Die WO2005/018905A1 offenbart ein Spritzprägeverfahren, wobei zwei oder mehr unterschiedliche Kunststoffmaterialien in eine Formkavität eingeführt werden, so dass zumindest die Gesamtmenge des Kunststoffmaterials vorbestimmt ist, und wobei nachfolgend das Volumen der Formkavität reduziert wird, um das Kunststoffmaterial in der Kavität zu verteilen, das gesamte Volumen der Kavität auszufüllen, und den gewünschten Artikel zu formen.

Die US-A-5662856 offenbart ein Kompressionsspritzgieß-Verfahren mit den Merkmalen des Oberbegriffs von Anspruch 1.

### Darstellung der Erfindung

Der Erfindung wurde nun die Aufgabe gestellt, nach Lösungen zu suchen, welche erlauben, mit dem Kompressionsspritzgiess-Verfahren in einem Zyklus grosse Stückzahlen von Preformen herzustellen mit Verkürzung der Zykluszeit und Verbesserung der Dosiergenauigkeit sowie Einsparung des Energieaufwandes.

Das erfindungsgemässe Kompressionsspritzgiess-Verfahren ist dadurch gekennzeichnet, dass die Schließkraft den benötigten Druck zum Einspritzen der Schmelze in die Kavitäten generiert und sich die Einspritzzeit mit der Schließbewegung überschneidet.

Die erfindungsgemässe Vorrichtung ist dadurch gekennzeichnet, dass die Kerne über einen Formschluss derart angetrieben sind, dass die Schließkraft den benötigten Druck zum Einspritzen der Schmelze in die Kavitäten generiert und die Schließeinheit derart ausgebildet ist, dass sich die Einspritzzeit mit der Schließbewegung überschneidet.

Vom Erfinder ist erkannt worden, dass die Phase der Schmelzedosierung von den Lösungen des Standes der Technik in Bezug auf die Preformherstellung nicht auf das "Pressure-Molding" übertragen werden kann. Beim klassischen Spritzgiessen wird in der Nachdruckphase Schmelze von der Plastifizierschnecke nachgeschoben. Beim "Pressure-Molding" ist die Verbindung von dem Plastifizierzylinder bzw. vom Extruder zu den Formnestern geschlossen, die Dosierung während der Druckphase, des eigentlichen Pressure-Moldings, gestoppt werden, sodass eine Dosierkorrektur nur im kleinsten Rahmen möglich ist.

Vom Erfinder ist ferner erkannt worden, dass eine hohe Produktivität mit dem Kompressionsspritzgiess-Verfahren des Standes der Technik nicht möglich war. Es war nicht möglich, mit Zykluszeiten von beispielsweise 8 bis 15 Sekunden 200 Preformen herzustellen.

Die neue Erfindung geht davon aus,
- dass als erstes Schmelze in einer vordosierten Menge für jedes einzelne Formnest vorbereitet wird,
- dass die Formnester zumindest im Wesentlichen vor dem Dosieren nach aussen verschlossen sind und dass die Kerne in eine Füll- bzw. eine Dosierstellung gefahren werden,
- wobei in dieser Stellung die Schmelze als Ringströmung eine vordosierte Schmelzemenge in die Kavität, vorzugsweise bis zu deren vollständigen Füllung, eingebracht wird
- und der Kompressionsdruck mittels der Kerne, vorzugsweise durch den Formschluss, erzeugt wird.

Bei der neuen Erfindung läuft der eigentliche Spritzvorgang in drei Hauptphasen ab:
- Phase 1: Nach dem Verschliessen der offenen Endseite der Preform Einfahren der Kerne in eine gesteuerte Dosierposition, vorzugsweise auf einen ersten Anschlag;
- Phase 2: Werkzeug schliessen und dosieren;
- Phase 3: Freigabe des Vorschubes der Kerne zur Erzeugung des Kompressionsdruckes, vorzugsweise auf einen zweiten Anschlag.

Dabei ist es nicht zwingend, dass die Kerne in der Dosierstellung eine exakte Stellung einnehmen. Die Kerne können über eine Steuereinrichtung innerhalb eines Füllbereiches so bewegt werden, dass die ringförmige Einströmung der Schmelze in die Kavität optimiert wird. Zum Beispiel kann mit dem Fliessdruck der Schmelze der Kern bis zum Abschluss der Dosierung leicht zurückgeschoben werden. Wichtig ist, dass nach beendeter Dosierung die Kavität mit der vordosierten Schmelzemenge voll gefüllt ist und die Kerne eine vorbestimmbare Dosierposition einnehmen, bevor der Kompressionsdruck startet. Der Kompressionsdruck wird aufgebaut und mehrere Sekunden aufrechterhalten.

Es ist eine bekannte Tatsache, dass eine heisse Kunststoffmasse bei einem Druck von etwa 1000 bar ein so stark elastischer Stoff ist, dass er gleich einer Feder mehr als 10% komprimierbar ist. Dadurch, dass der Dosierdruck mit beispielsweise 50 bis 200 bar viel tiefer gewählt werden kann, ist die Dosierung entsprechend weniger von dem Kompressionsverhalten der Schmelzemasse beeinflusst. Dies bedeutet, dass die Dosierung besser kontrollierbar und damit auf eine höhere Genauigkeit bringbar ist. Ein weiterer Vorteil liegt darin, dass das Dichtverhalten der Kerne und der Kavitäten mit zunehmendem Kompressionsdruck besser wird, da einerseits auf die äusseren Dichtflächen ein höherer Dichtdruck aufgebracht und andererseits die Dichtlänge mit dem tieferen Eindringen der Kerne grösser wird. Ganz besonders entscheidend ist aber, dass für jedes einzelne Formnest vor Beginn eines Spritzzyklus eine Dosiermenge schon vorbereitet ist. Mit der Vorbereitung einer Dosiermenge in einem Vorraum für jedes Formnest kann die entsprechende Füllzeit gemäss Stand der Technik auf einen Bruchteil gesenkt werden, was direkt in einer Verkürzung der Zykluszeit resultiert. Dank viel kleinerem Druck kann Energie eingespart werden.

Der entscheidende Vorteil der neuen Erfindung liegt darin, dass einerseits mit vordosierten Mengen
a) die Dosierung für alle Preformen auf eine höhere Stufe in Bezug auf die Dosiergenauigkeit in Bezug auf eine exakte und gleiche Dosierung für jedes der Formnester gebracht werden kann,
b) die Dosierzeit massiv gekürzt werden kann. Dies, weil die Dosiermenge unmittelbar vor jedem Formnest bzw. vor jeder Kavität vorbereitet wird und die Vordosierung während der Zeit der Preformentnahme und der nächsten Dosierphase vorbereitet wird.

Ein besonders wichtiger Punkt liegt darin, dass eine vordosierte identische Schmelzemenge in jedes der Formnester eingebracht wird. Dies hat den grossen Vorteil, dass eine exakte Enddosierung durch eine Korrektur aus einem Schrumpfausgleichsraum gemacht werden kann.

Die neue Erfindung gestattet eine ganze Anzahl besonders vorteilhafter Ausgestaltungen. Es wird dafür auf die Ansprüche 2 bis 14 sowie 16 bis 25 Bezug genommen.

Bevorzugt wird die Spritzgiessmaschine als Horizontalmaschine ausgebildet, mit horizontal bewegbarer Formhälfte. Bei horizontaler Lage der Maschine bzw. der Formnester trifft nach Öffnen der Ventilnadel der erste Schmelzestrahl symmetrisch direkt auf die Spitze der Kerne und wird danach abgelenkt. Je nach Kontur der Kernspitze kann ein Teil dieser Schmelze an der Spitze haften bleiben, mit dem Vorteil, dass diese besonders heikle Partie sich zuerst abkühlt.

Die Dosiermenge wird für je einen Dosiervorgang für jeden Schuss und für jedes Formnest in einem vorgelagerten Dosiervorraum vorbereitet. Dabei wird die Dosiermenge in dem Dosiervorraum durch ein jedem Formnest zugeordnetes Doppelventil mitbestimmt, welche als Einspritzventil an der einen Endseite und als Zuführventil auf der anderen Endseite einer Ventilnadel ausgebildet sind. Über eine gesteuerte Bewegung wird das Einspritzventil wechselweise in das Formnest bzw. in den Eingang zum Dosiervorraum in einem Schrumpfausgleichsraum geöffnet und der je gegenüberliegende Ausgang geschlossen. Im weiteren können die einzelnen Dosiervorräume als Dosierzylinder ausgebildet sein, zu denen sich eine Kolbenplatte mit je einem Ausstosskolben für jeden Dosiervorraum relativ bewegt, sodass die vordosierte Schmelzemenge identisch und zeitgleich in alle Formnester eingebracht wird. In diesem Fall ist es möglich, dass das Einbringen der Schmelze in die Kavitäten überschneidend mit der Einfahrbewegung der Kerne in die Kavitäten gesteuert wird. Ganz besonders im Falle eines Antriebes mit Servomotor oder Linearmotor kann die Kernbewegung mit höchster Genauigkeit beliebig wiederholbar gesteuert, in der Phase der Kavitätenfüllung geregelt und ohne mechanischen Stopp gezielt positioniert oder als Bewegungsablauf programmiert werden.
- Die erste Bewegung der Kerne erfolgt nahezu ohne Widerstand sehr schnell bis zur Füll- bzw. Dosierposition, vorzugsweise mit einem einstellbaren ersten Stopp zwischen der Dosierphase sowie der Kompressionsphase.
- Die zweite Bewegung für den Kompressionsdruck kann verzögert erfolgen, jedoch mit der maximal möglichen Verschlusskraft nahe der Strecklage der Kniehebel auf einem zweiten einstellbaren Stopp bzw. Anschlag.

Gemäss einer weiteren Ausgestaltung kann der Antrieb der beweglichen Formhälfte hydraulisch oder elektrisch, insbesondere über einen Linearantrieb oder einen Servomotor, erfolgen.

Ferner ist es möglich, dass das Einbringen der Schmelze in die Kavitäten überschneidend mit der Einfahrbewegung der Kerne in die Kavitäten gesteuert wird. Durch den Weg der Ausstosskolben wird die Vordosiermenge festgelegt. Durch die Verwendung unterschiedlicher Durchmesser und Längen der Dosierzylinder und der Ausstosskolben können grosse Sprünge in Bezug auf die Dosiermengen für unterschiedlich dicke Preformen gemacht werden.

Gemäss einer ganz besonders vorteilhaften Ausgestaltung wird diesem Dosiervorraum zusätzlich noch ein Schrumpfausgleichsraum für jedes Formnest vorgelagert, sodass während der ersten Schrumpfphase der Preformen noch Schmelze in das Formnest nachströmen kann. Dabei wird während dem Schrumpfausgleich durch das Ventil der Eingang in den Schrumpfausgleichsraum geschlossen.

Gemäss einer weiteren vorteilhaften Ausgestaltung kann die Dosierung der Schmelze in dem Formnest selber leicht korrigiert werden. Dabei werden die Kerne gesteuert so weit in die Kavitäten hineinbewegt, bis ein vorbestimmbares Dosiervolumen eingestellt ist. Dies setzt voraus, dass die bewegliche Werkzeugträgerplatte für die Dosierposition positions- und weggesteuert / -geregelt wird, damit sich in der Kavität ein gewünschter Dosierraum einstellt. Bereits mit einem Schmelzedruck von mehr als 20 bar kann das Formnest im Wesentlichen beliebig wiederholbar gefüllt werden und so eine hohe Dosiergenauigkeit der Schmelzemenge erreicht werden. Ein hoher Dosierdruck von beispielsweise 50 bis 250 bar, vorzugsweise 100 bis 200 bar wird benötigt, damit die Schmelze mit hoher Geschwindigkeit auch in die am weitesten entfernten Hohlraumpartien jeder Kavität, insbesondere den Gewindeteil der Preformen, eingebracht werden kann. Durch eine schnelle Füllung wird eine vorzeitige örtliche Abkühlung der Schmelze, beispielsweise in dem Randbereich der Kavitäten, verhindert.

Im Unterschied zum relativ tiefen Dosierdruck, in der Regel von weniger als 200 bar, soll der Kompressionsdruck auf 200 bis 600 bar gebracht werden. Hierzu macht sich die neue Lösung die Vorteile des Kompressionsdruckes ganz besonders zunutze. Eine Plastifizierschnecke ist, da sie primär die Aufgabe der Schmelzeaufbereitung hat, eine Druckpumpe mit einem schlechten Wirkungsgrad. Dagegen ist die mechanische Druckerzeugung mit dem Kern, insbesondere wenn dieser über den Formschluss mit einem Kniehebel angetrieben ist und die Kompressionsphase nahe der Strecklage der Kniehebel genutzt wird, optimal in Bezug auf die benötigte Energie.

Dadurch, dass bei jedem Schuss die für jede Kavität benötigte Schmelzemenge direkt vor der Kavität vorbereitet wird, kann die Einspritzphase verkürzt und eine höhere Dosiergenauigkeit erreicht und Energie gespart werden.

### Kurze Beschreibung der Erfindung

Die Erfindung wird nun anhand einiger Ausführungsbeispiele erläutert. Es zeigen:
- die Figur 1: schematisch eine Gesamtübersicht einer Spritzgiessmaschine des Standes der Technik;
- die Figur 2a: zeigt schematisch die Schmelzezuführung in die Kavitäten mit einem Dosiervorraum sowie einem Schrumpfausgleichsraum für die Schmelze gemäss der neuen Erfindung;
- die Figur 2b: zeigt einen zweiten einstellbaren Anschlag;
- die Figur 2c: zeigt einen ersten einstellbaren Anschlag;
- die Figur 3a: zeigt die Werkzeug- und Einspritzseite einer erfindungsgemässen Vorrichtung;
- die Figuren 3b bis 3e: zeigen vier verschiedene Positionen des Werkzeuges bzw. des Formschlusses einer erfindungsgemässen Spritzgiessmaschine. Die Figur 3b zeigt eine Startposition mit offenen Formen. Die Figur 3c zeigt die Neckringe, bereits eingefahren. In der Figur 3d ist das Ende der Vordosierung dargestellt, und die Figur 3e zeigt eine Situation während der Kompressionsphase;
- die Figuren 4a bis 4c: zeigen drei Positionen beim Einfahren eines Neckringes sowie eines Kerns in eine Kavität; die Figur 4a zeigt den Neckring sowie den Kern in zurückgezogener Stellung; in der Figur 4b ist der Neckring bereits in einer Dichtstellung; in der Figur 4c ist der Kern eingefahren in einer Dosierstellung;
- die Figuren 5a bis 5g: sieben Positionen eines Spritzzyklus;
- die Figuren 6a bis 6e: fünf Positionen für den Dosiervorgang mit einem jeder Kavität vorgelagerten Dosierraum sowie einem Schrumpfausgleichsraum;
- die Figuren 7a bis 7c: drei Positionen für die Dosier- sowie die Kompressionsphase.

### Wege und Ausführungen der Erfindung

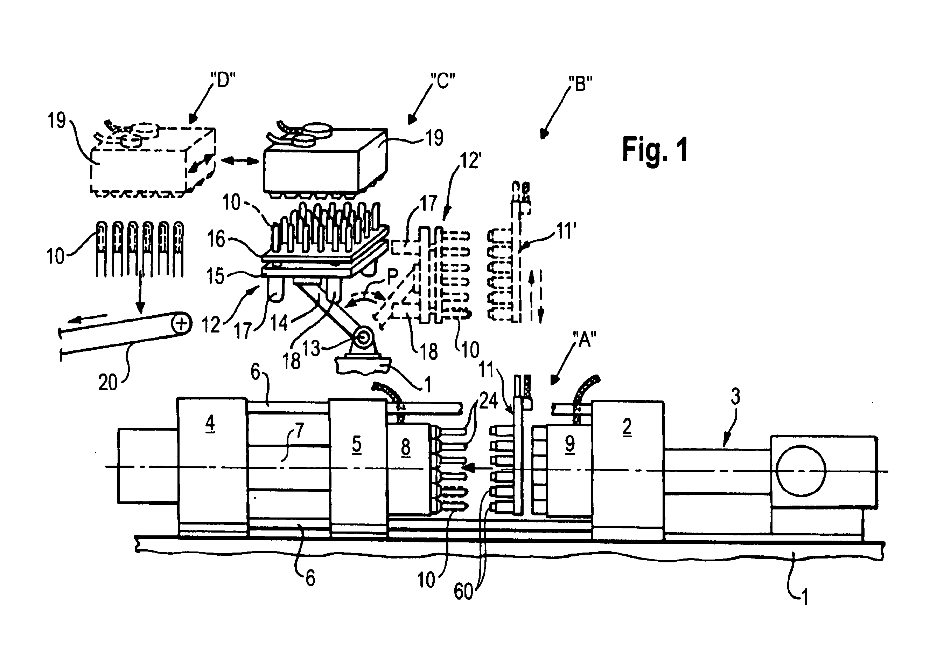

Die Figur 1 zeigt eine ganze Spritzgiessmaschine des Standes der Technik für die Herstellung von Preformen 10 mit einem Maschinenbett 1, auf dem eine feste Werkzeugträgerplatte 2 und eine Spritzeinheit 3 sowie eine Abstützplatte 4 gelagert sind. Eine bewegliche Werkzeugträgerplatte 5 ist axial verschieblich auf dem Maschinenbett 1 abgestützt. Die feste Werkzeugträgerplatte 2 und die Abstützplatte 4 sind durch vier Holme 6 miteinander verbunden, welche die bewegliche Werkzeugträgerplatte 5 durchsetzen und führen. Zwischen der Abstützplatte 4 und der beweglichen Werkzeugträgerplatte 5 befindet sich eine Antriebseinheit 7 zur Erzeugung der Schliessbewegung sowie des Schliessdruckes. Die feststehende Werkzeugträgerplatte 2 und die bewegliche Werkzeugträgerplatte 5 tragen jeweils eine Formhälfte 8 und 9, in denen jeweils eine Vielzahl von Kernen 24 und Kavitäten 60 angeordnet ist, die zusammen die Formnester zur Erzeugung einer entsprechenden Zahl hülsenförmiger Spritzgiessteile bilden. Nach dem Öffnen der Formhälften 8 und 9 haften die hülsenförmigen Spritzgiessteile 10 an den Kernen 24. Die Preformen 10 befinden sich zu diesem Zeitpunkt noch in einem halb erstarrten Zustand und sind mit unterbrochenen Linien angedeutet. Die gleichen Spritzgiessteile 10 im fertig gekühlten Zustand sind in der Figur 1 links oben dargestellt, wo sie gerade aus einer Nachkühleinrichtung 19 abgeworfen werden. Die oberen Holme 6 sind zum Zweck der besseren Darstellung der Einzelheiten zwischen den geöffneten Formhälften unterbrochen dargestellt.

In der Figur 1 sind die vier wichtigsten Handlingsphasen für die Preformen 10 nach Abschluss des Spritzprozesses dargestellt:
**"A"**ist die Entnahme der Spritzgiessteile oder Preformen 10 aus den beiden Formhälften 8, 9. Die noch halbstarren hülsenförmigen Teile werden dabei von einer in den Raum zwischen den geöffneten Formhälften 8, 9 und einer in die Position "A" abgesenkten Entnahmevorrichtung 11 aufgenommen und mit dieser in die Position "B" angehoben (Aufnahmevorrichtung 11' in Figur 1).
**"B"** ist die Übergabestellung der Entnahmevorrichtung 11 mit den Preformen 10 an einen Transfergreifer 12 ("B" in Figur 1).
**"C"** ist die Übergabe der Preformen 10 von dem Transfergreifer 12 an eine Nachkühleinrichtung 19.
**"D"** ist der Abwurf der abgekühlten und in einen formstabilen Zustand gebrachten Preformen 10 aus der Nachkühleinrichtung 19.

Die Figur 1 zeigt sozusagen Momentaufnahmen der vier Hauptschritte für das Handling nach der Entnahme aus den Formhälften 8, 9. In der Position "B" werden die senkrecht übereinanderliegend angeordneten hülsenförmigen Preformen 10 von dem Transfergreifer 12 bzw. 12' übernommen und durch Verschwenken der Transfervorrichtung in Richtung des Pfeiles P in eine Position, horizontal nebeneinander stehend, gemäss Phase "C", gebracht. Der Transfergreifer 12 besteht aus einem um eine Axe 13 schwenkbaren Haltearm 14, der eine Halteplatte 15 trägt, zu der im Parallelabstand eine Trägerplatte 16 für Kerne 24 angeordnet ist. Die Trägerplatte 16 ist mittels zweier Hydraulikeinrichtungen 17 und 18 parallel zur Halteplatte 15 ausstellbar, so dass in der Position "B" die hülsenförmigen Spritzgiessteile 10 aus der Entnahmevorrichtung 11 geholt und von der in die Position "C" geschwenkten Lage in die darüberliegende Nachkühleinrichtung 19 geschoben werden können. Die jeweilige Übergabe erfolgt durch Vergrösserung des Abstandes zwischen der Halteplatte 15 und der Trägerplatte 16. Die noch halbstarren Preformen 10 werden in der Nachkühleinrichtung 19 während drei bis vier Zyklen fertiggekühlt und danach, nach einer Verschiebung der Nachkühleinrichtung 19, in der Position "D" ausgestossen und auf ein Förderband 20 geworfen.

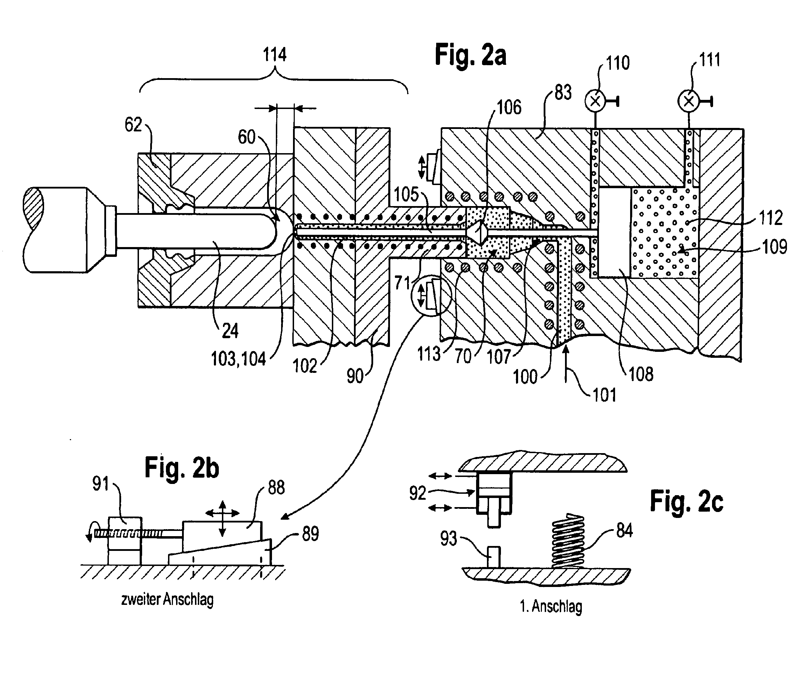

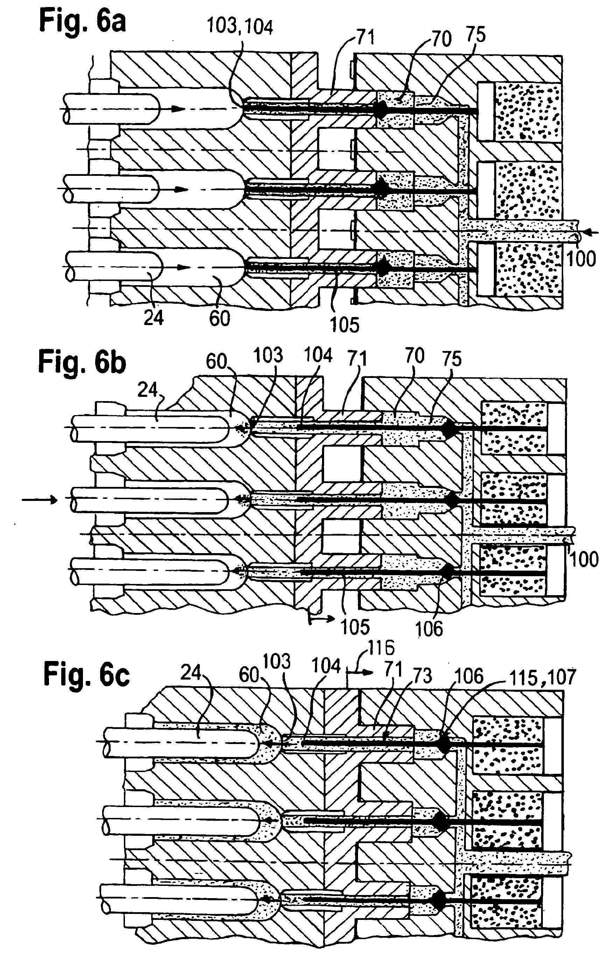

Die Figur 2a zeigt eine besonders vorteilhafte Ausgestaltung der Schmelzedosierung entsprechend der Figuren 6a bis 6e. Die Vorrichtung weist zu diesem Zweck einen Dosiervorraum 70 auf, der mit einem Schmelzeüberführkanal 100 mit einem Extruder verbunden ist, gemäss Pfeil 101. Innerhalb des Dosiervorraumes 70 sowie eines Schmelzekanals 102 ist eine Ventilnadel 105 angeordnet, welche einerseits die Einspritzöffnung 103 mit der Ventilnadelspitze 104 öffnet und andererseits schliesst. Auf der rechten Endseite weist die Ventilnadel 105 einen Ventilkörper 106 auf, welcher in der entgegengesetzten Stellung die Schmelzezufuhr mit dem Ventilsitz 107 verschliesst. Betätigt wird die Ventilnadel 105 über einen Kolben 108, der innerhalb eines Zylinders 109 mittels eines Pneumatikmediums 112 sowie Ventilen 110 und 111 im erforderlichen Takt des Spritzzyklus gesteuert wird. Das Pneumatikmedium 112 ist mit grösseren Punkten und die Schmelze mit feinen Punkten dargestellt. Die Schmelze wird, zumindest in dem Dosiervorraum 70, in dem Schmelzeüberführkanal 100 mittels Heizelementen 113 geheizt. Aus der Figur 2a ergibt sich ein Wechselspiel zwischen Nachfüllen des Dosiervorraumes 70 sowie Überführen des Dosiervorraum-Volumens in die Kavitäten 60. Zu diesem Zweck bewegt sich die ganze Vorrichtung 114 nach rechts. Weil die Schmelzeüberführung in den Kavitäten 60 unabhängig vom Fluss im Schmelzeüberführkanal 100 erfolgt, kann die bisher benötigte Zeit für das Füllen der Kavität 60 gespart werden. Diese Zeiteinsparung kann in der Grössenordnung von 1 bis 4 Sekunden liegen, was bei einer Gesamtzykluszeit von beispielsweise 10 bis 14 Sekunden eine enorme Produktivitätssteigerung bedeutet.

Die Figur 2b zeigt die Anordnung zweier verstellbarer Keile 88, 89 zwischen der Heisskanalplatte 83 sowie der Platte 90 als zweiter Anschlag. Durch die Verstellung der beiden Keile 88, 89 kann der zweite Anschlag eingestellt werden, dies mittels eines gesteuerten Antriebes 91. Mit dem zweiten verstellbaren Anschlag kann die exakte Dosiermenge bzw. der Weg des Dosierkolbens 71 voreingestellt werden.

Ein erster Anschlag ist als Hydraulikzylinder 92 und als Anschlagsbolzen 93 gemäss Figur 2c ausgebildet. In der Figur 2c ist ferner eine Druckfeder 84 dargestellt. Die Feder 84 hat die Funktion, die Formschlusskraft in der betreffenden Position zu speichern. Mit dem ersten Anschlag wird am Ende der Dosierposition über den Hydraulikzylinder 92 der Weg freigegeben für die Kompressionsphase.

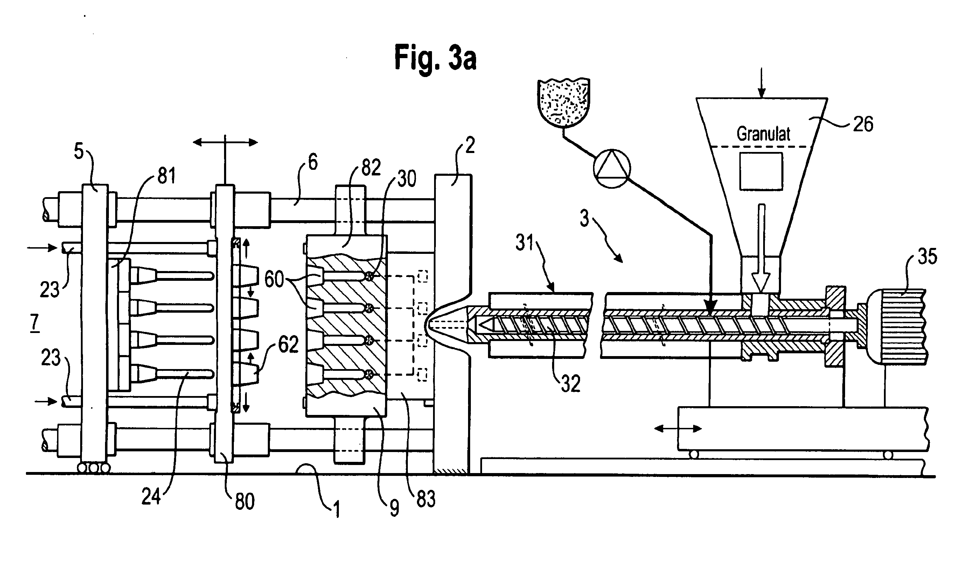

Die Figur 3a zeigt das Spritzgiesswerkzeug in der Startphase für einen Spritzzyklus. Die Kerne 24 sind ausgefahren. Das Werkzeug ist in offener Position. Die bewegliche Werkzeugträgerplatte 5 ist ganz links. Sinngemäss sind auch die Neckringe 62 mit der Neckringträgerplatte 80 in ausgerückter Lage dargestellt, unmittelbar nach der Entnahme der Preformen 10. Die Neckringträgerplatte 80 ist auf der beweglichen Werkzeugträgerplatte 5 abgestützt und kann von dieser bewegt werden oder über den Antrieb 23 eine eigene Fahrbewegung ausführen. Mit der beweglichen Werkzeugträgerplatte 5 ist eine Kernträgerplatte 81 fest verbunden, so dass die Kerne 24 direkt mit dem Formschluss bewegt werden. Die Neckringträgerplatte 80 ist auf den Holmen 6 geführt. Dementsprechend ist auch eine Formnestplatte 82 ebenfalls verschiebbar auf den Holmen 6 geführt. Unmittelbar auf der feststehenden Werkzeugträgerplatte 2 befindet sich eine Heisskanalplatte 83, welche Teil eines zweiteiligen Werkzeugs ist, bestehend aus der Heisskanalplatte und der Formnestplatte 82. Diese beiden Platten sind relativ zueinander verschiebbar. Mit der entsprechenden Relativbewegung kann, wie nachfolgend noch erklärt wird, Schmelze in die Formnester bzw. Kavitäten 60 eindosiert werden. Die Formnestplatte 82 kann zu diesem Zwecke von einem Antrieb bewegt werden, welcher auf der beweglichen Werkzeugträgerplatte 5 abgestützt ist. Der Antrieb 23 drückt die Formnestplatte 82 in Richtung der Heisskanalplatte 83, wobei eine Feder 84 gespannt wird. Mit dem Spannen der Feder 84 wird während der Öffnungsbewegung des Formschlusses die Formnestplatte 82 nach links bewegt und ein Dosiervorraum mit neuer Schmelze gefüllt. Anstelle der Feder kann auch irgendein Antrieb, beispielsweise ein gedrosselter Hydraulikzylinder, eingesetzt werden.

Die Spritzeinheit 3 besteht aus einer Plastifiziereinheit 31 mit einer Plastifizierschnecke 32 und einem Speisetrichter 26 für die Granulatzufuhr mit entsprechenden Antrieben 35. Nach der Vorbereitung einer Schussmenge wird das Ventil 30 umgesteuert und gibt den Weg zu den Kavitäten 60 frei. Mit einer Ausstossbewegung des Zylinders 28 wird eine vordosierte Schmelzemenge in die Kavitäten 60 bzw. in die Dosiervorräume 70 eingespritzt.

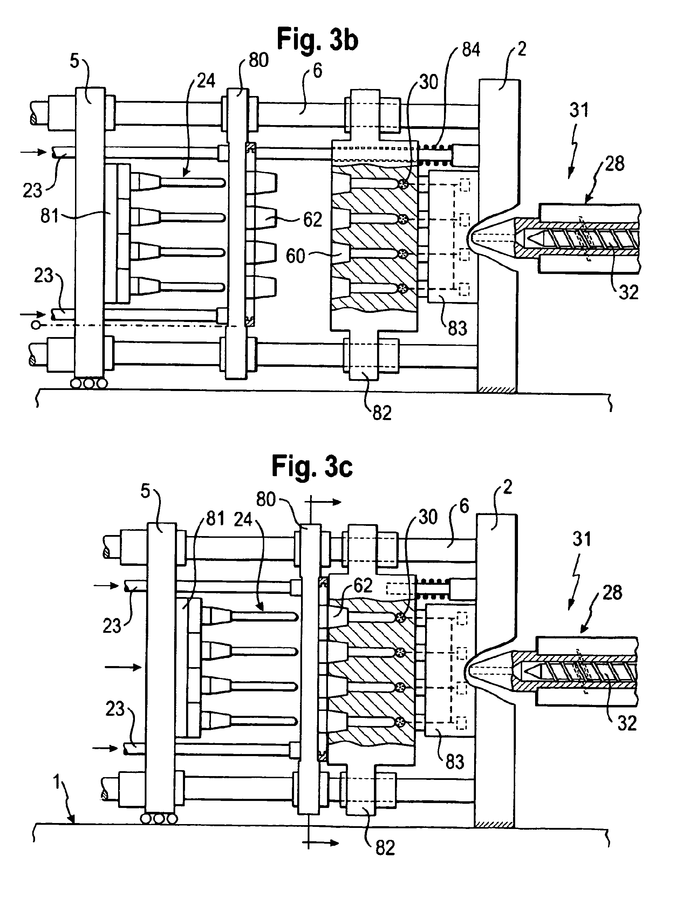

Die Figuren 3b bis 3e zeigen vier nacheinander folgende Situationen für das Kompressionsspritzgiessen gemäss der neuen Erfindung. Die Figur 3b zeigt das Spritzgiesswerkzeug in der Startphase für einen Spritzzyklus.

Die Figur 3c zeigt eine zweite Phase zur Vorbereitung eines Spritzzyklus. Die Neckringe 62 sind bereits in den Eintrittsbereich der Kavitäten 60 eingedrungen und verschliessen den entsprechenden äusseren Rand. Das Ventil ist noch in verschlossener Stellung.

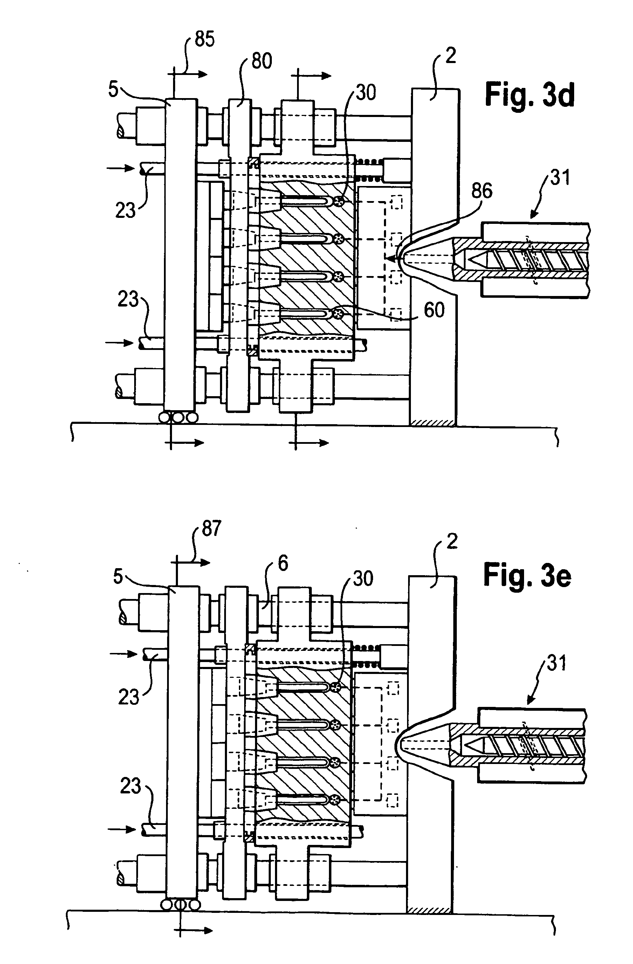

Die Figur 3d zeigt als Folgeschritt das Einfahren der Kerne 24, gemäss Pfeil 85, in eine Füll- bzw. eine Dosierstellung der Kerne 24 innerhalb der Kavitäten 60. Gleichzeitig ist dies der Beginn der Schmelzedosierung in die Kavitäten 60 entsprechend Pfeil 86.

Die Figur 3e zeigt die Kompressionsphase. Dabei werden die Kerne 24 gemäss Pfeil 87 um einen Kompressionsweg in die Kavität 60 mit gefüllter Schmelze eingepresst. Dabei sind die Ventile bereits verschlossen. Nach Beginn der Kompressionsphase wird bereits eine neue Dosiermenge für den nächsten Spritzzyklus vorbereitet.

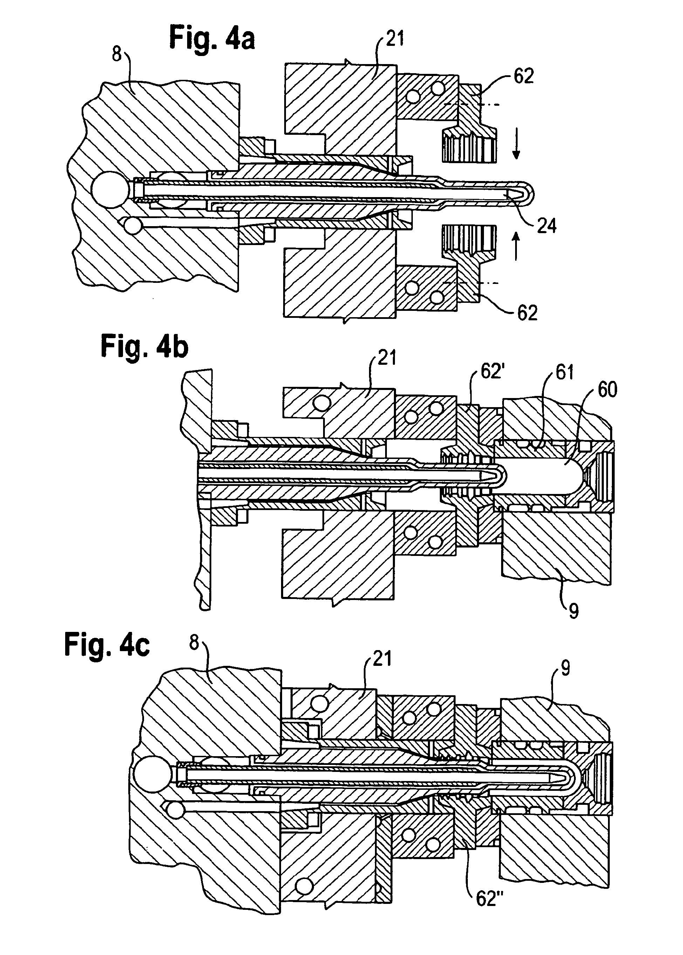

Die Figuren 4a bis 4c zeigen schematisch drei Situationen beim Einfahren eines Kerns 24 sowie des Neckrings 62, 62', 62" in eine Kavität 60. Die Kavität 60 wird im zylindrischen Teil durch eine Kühlhülse 61 bestimmt. Im Bereich der offenen Endseite der Preform wird die äussere Kontur, insbesondere das ganze Gewindeteil der Preform 10, durch einen Neckring 62 bestimmt. Die ganze Innenform der Preform 10 wird durch den Kern 24 gebildet (Figur 4c). Der Kern 24 bewegt sich mit der beweglichen Formhälfte 8 in die horizontale Richtung. Das selbe gilt für den Neckring 62, 62', 62", soweit es die Einfahrbewegung in die Kavität 60 betrifft. Um das Gewindeteil der Preform 10 frei zu geben, muss der Neckring 62 geteilt ausgebildet werden, sodass die beiden Hälften quer zur Horizontalbewegung wegfahren können, so wie dies in der Figur 4a dargestellt ist. Bei Beginn eines Spritzzyklus wird als erstes der Neckring 62 geschlossen und zur Kavität 60 bis zu einem Dichtschluss zugefahren (Figur 4b). Als letztes bewegt sich der Kern 24 in die Kavität 60 (Figur 4c).

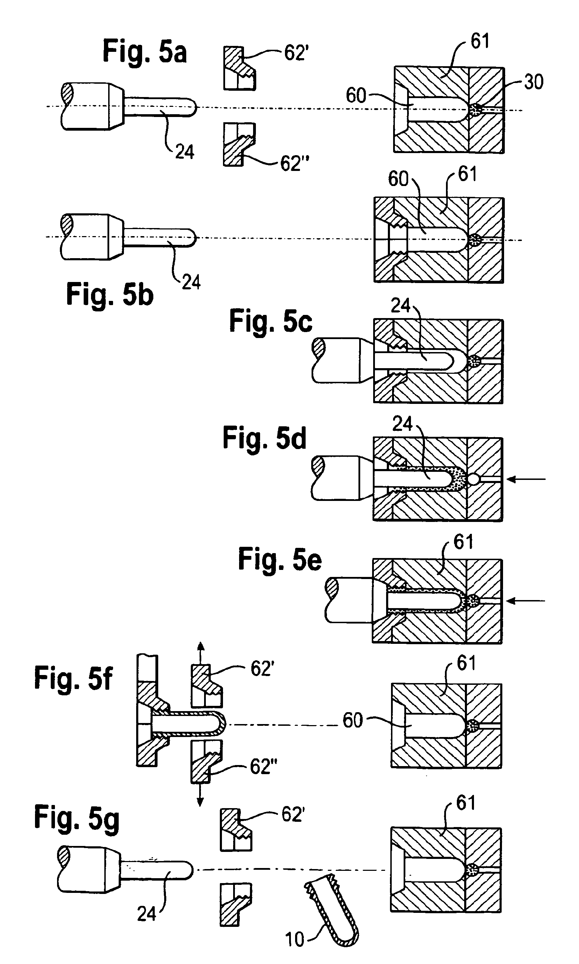

Die Figuren 5a bis 5g zeigen sieben Situationen gemäss der neuen Lösung mit dem Kompressionsspritzgiess-Verfahren. Die Figuren 5a und 5c entsprechen den Figuren 4a und 4b. Die Figur 5c zeigt, (in Abweichung zur Figur 4c) die Kerne 24 noch nicht vollständig in die Kavität 60 eingefahren. Die Figur 5d zeigt die selbe Kemposition wie in der Figur 5c; jedoch wurde bereits eine dosierte Menge Schmelze (punktiert) in die Kavität 60 eingespritzt. Die Kompressionsphase kommt in der Figur 5e (Preform schwarz) zum Ausdruck. Dazu wird der Kern 24 vollständig in die Position eingepresst, in der die Preform 10 die endgültige Spritzform erhält. Die Figur 5f zeigt den Kern 24 bereits ausgefahren und die Figur 5g die Freigabe der Preform 10.

Die Figuren 6a bis 6e zeigen einen bevorzugten Ausgestaltungsweg, bei dem vor dem Einspritzen in die Kavität 60 die Schmelze exakt vordosiert wird. Der Dosiervorraum 70 hat eine zylindrische Form, sodass ein entsprechender Kolben 71 analog einer Kolbenpumpe eine voreinstellbare Verdrängungsbewegung ausführen kann. Durch Variieren des Durchmessers D sowie der Länge L kann das Volumen des Dosiervorraumes (70) vergrössert und verkleinert werden.

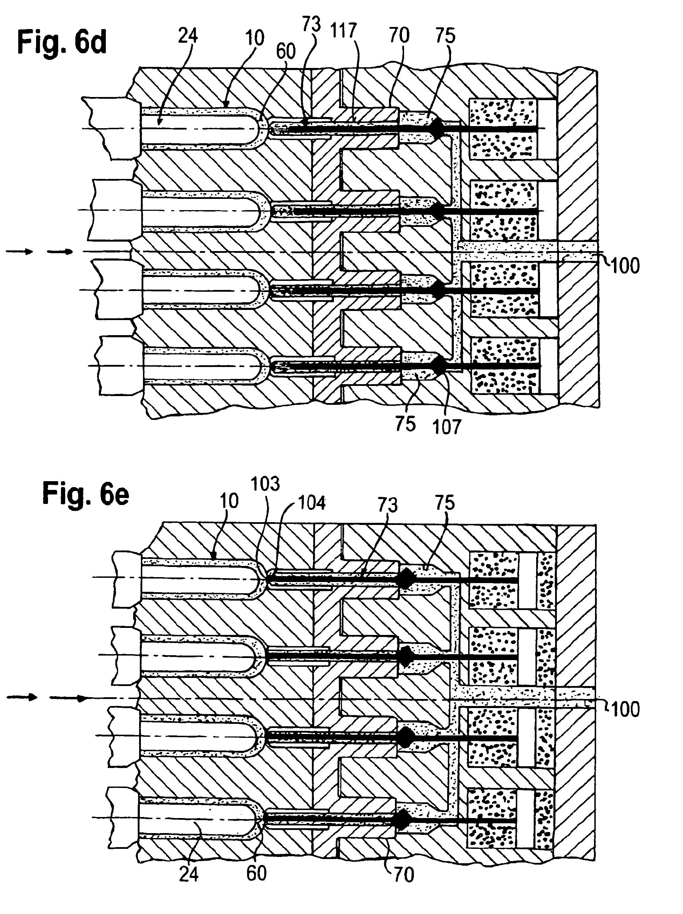

In der Figur 6a ist der Dosiervorraum 70 gefüllt. In den beiden Figuren 6b und 6c wird die Schmelze in die Kavität 60 gespritzt. Zu diesem Zweck wird die Ventilnadel 73 von der Einspritzdüse 103 abgehoben. Mit dem Abheben der Ventilnadel 73 wird über einen hinteren Ventilsitz der Eingang zum Dosiervorraum 70 verschlossen. Gemäss der Figur 6d ist der Dosiervorraum 70 ganz abgeschlossen, und die Ventilnadel 73 wird nach links in die geschlossene Position gebracht. Die Figur 6e zeigt die Kompressionsphase. In dieser bevorzugten Ausgestaltung dient der Heisskanal des Werkzeuges als "Vorverteiler", um direkt vor den jeweiligen Nadelverschlussdüsen, die vor jeder Kavität 60 anstehen, eine Schmelzekammer zu füllen, die die Schmelze bis zum maximalen Schussgewicht einer Preform 10 aufnehmen kann. Diese Kammern sind im Heisskanal integriert und werden durch Kolben geschlossen, die gemeinsam mit den Düsen schwimmend auf einer beweglichen Platte verbunden sind. Die Verschlussnadeln des Heisskanals werden durch diese Kolben geführt bis hin zur Düsenspitze. Sie können in der vorderen Position die Düsen verschliessen. In der zurückgezogenen Position der Ventilnadel 73 wird der Dosiervorraum 70 von der Schmelzezufuhr getrennt. Dieser vorteilhafte Aufbau erlaubt, die gute Schmelzeverteilung eines Heisskanals zu nutzen, um die nachfolgenden Schmelzekammern mit relativ tiefem Schmelzedruck zu füllen. Die Schmelzekammern selber garantieren dann ein sehr präzises Schussgewicht je Kavität 60. Wurden die Schmelzekammern während der Entnahmezeit der Preformen 10 aus dem vorherigen Schuss gefüllt, begrenzt durch verstellbare Anschläge der Kolbenplatte, kann die Schliesseinheit nach Freigabe wieder zugefahren werden. Während der Füllphase der Schmelzekammern sind diese trotz der Relativbewegung der Kolben von den Kavitäten 60 durch die Verschlussnadeln abgedichtet.

Die Figur 6a zeigt die Füllphase des Dosiervorraumes 70. Dabei ist die Einspritzöffnung 103 mit der Ventilnadelspitze 104 geschlossen. Gleichzeitig mit dem Füllen des Dosiervorraumes 70 bleibt auch ein Schrumpfausgleichsraum 75 voll gefüllt. Der Kern 24 bewegt sich bereits in eine Dosierstellung. Dem Dosiervorraum 70 ist ein Schrumpfausgleichsraum 75 vorgelagert.

Die Figur 6b zeigt den Anfang der Dosierung. Der Dosiervorraum 70 sowie der Schrumpfausgleichsraum 75 ist noch voll.

Die Figur 6c zeigt die eigentliche Füllphase bzw. Dosierphase der Kavität 60. Die Ventilnadel 73 ist nach rechts zurückgezogen. Die Einspritzdüse 103 ist offen. Die Einfüllöffnung 115 ist mit dem hinteren Ventilsitz 106 geschlossen. Der Kolben 71 ist entsprechend Pfeil 116 bereits nach rechts verschoben und im Begriff, die Schmelze im Dosiervorraum 70 zu verdrängen und in der Kavität 60 zu dosieren.

Die Figur 6d zeigt die Phase des Schrumpfausgleichs nach der Kompressionsphase. Das Ventil 106 ist in zurückgezogener Stellung und verschliesst die Einfüllöffnung 107. Der Kompressionsdruck herrscht sowohl in dem Schrumpfausgleichsraum 75 wie auch in der Kavität 60. Über den freien Verbindungskanal 117 findet eine Ausgleichsströmung, zumindest während der ersten Kühl- bzw. Schrumpfphase der Preform 10 statt. Damit wird die Schrumpfung kompensiert durch die unter Kompressionsdruck stehende Schmelze in dem Schrumpfausgleichsraum 75.

Die Figur 6e zeigt die Situation am Ende der Kühl- bzw. Schrumpfphase. Die Ventilnadelspitze 104 hat die Einspritzöffnung 103 bereits verschlossen. Der Dosiervorraum 70 sowie der Schrumpfausgleichsraum 75 können für den nächsten Spritzzyklus wieder gefüllt werden.

Der grosse Vorteil einer Lösung gemäss den Figuren 6a bis 6e liegt darin, dass während der Formöffnung und Formschliessung wieder eine vordosierte Schmelzemenge bereitgestellt werden kann. Es ergibt sich daraus ein Zeitgewinn für einen Spritzzyklus von 1 bis 3 Sekunden. Bei einer Preform mit 4 mm Wandstärke und 25 Gramm Gewicht rechnet man im jüngsten Stande der Technik mit 14 Sekunden Zykluszeit, wobei die Nachdruckzeit etwa 6 Sekunden und die Restkühlzeit etwa 3 Sekunden dauern. Die Schrumpfung kann im Extremfall bis zu 8% betragen. Die Dosierphase an sich kann neu auf 1/2 - 1 Sekunde reduziert werden.

Ist die optimale, frei vorwählbare Schliessposition erreicht (Figur 6c), wird das Einspritzen der Schmelze aus den Kammern in die Kavitäten 60 eingeleitet. Genau an diesem "Schaltpunkt" hat die Schliesseinheit auf eine Dämpfung beliebiger Art (Figur 2b), beispielsweise eine Feder 84, zu fahren, die einen höheren Gegendruck gegen die Schliesskräfte generiert als sie zum Einspritzen der Schmelze aus den Schmelzekammern zum Füllen der Kavitäten 60 benötigt. Hier wären Hydraulikzylinder denkbar, die den gesamten Hub begleiten und in der gewünschten Position per Wegaufnehmer das Ventil schliessen. Diese Zylinder könnten aber auch in Kurzbauweise die Schliessbewegung auffangen, um den Einspritzhub einzuleiten. Jedoch wäre nach dem Einspritzvorgang auch hier eine Freigabe zum völligen Schliessen der Schliesseinheit notwendig. Fährt die Schliesseinheit auf die besagte Dämpfung, wird durch den Kraftaufbau auf die Kolbenplatte nun die Schmelze in die Kavitäten gedrückt (Figur 6a).

Wenn die Endlage der einzelnen Kolben erreicht ist, wird die Dämpfung wieder freigegeben, um mit der vorhandenen Schliesskraft, wie bereits erwähnt, die Form völlig zu schliessen und die eingeschlossene Schmelze in der jeweiligen Kavität unter Druck zu setzen für das "Compression-Moulding". Die Dimensionen der einzelnen Kolben bzw. Kammern müssen dahingehend ausgelegt werden, dass die Schliesskraft den benötigten Druck zu Einspritzen der Schmelze in die Kavitäten generieren kann. Durch die nun weitgehend identischen Schmelzemengen in den einzelnen Kavitäten und verbleibenden Schmelzekammern stellt sich in allen Kavitäten ein gleicher Schmelzedruck während der Nachdruckphase ein, der den durch Abkühlung entstehenden Volumenschwund der Schmelze ausgleicht. Mit der neuen Lösung ist der Schmelzeweg zwischen dem Dosiervorraum und den jeweiligen Kavitäten für jede Kavität identisch. Dies im Unterschied zur Heisskanalplatte des Standes der Technik. Es entstehen Preformen unter optimalen Bedingungen mit höchsten Qualitäten.

Nach Abschluss der Nachdruckzeit schliessen die Nadeln, zum Übergang in die Kühlzeit. Nach Abschluss der Kühlzeit wird das Werkzeug in bekannter Weise geöffnet. Mit dem Öffnungshub der Schliesseinheit kann zeitgleich das Wiederbefüllen der Schmelzekammern eingeleitet werden und die Dämpfung je nach Bauweise wieder in ihre Ausgangslage gefahren werden. Die Kolbenplatte wird durch die einfliessende Schmelze wieder in eine voreinstellbare Position geschoben. Die Verschlussnadeln sind dabei derart gesteuert, dass diese während des Füllvorganges die Düsen verschlossen halten, um ein Einfliessen der Schmelze in die Kavitäten durch den Fülldruck zu vermeiden (Figur 6e).

Sind die Preformen durch einen Entnahmeroboter gemäss dem Stand der Technik entnommen, kann die Schliesseinheit wieder bis auf die Dämpfung geschlossen werden, die das Einspritzen der Schmelze wiederum einleitet. Der Vorteil dieser Spritzeinheit 3 ist, dass diese in jeder leicht modifizierten horizontalen oder vertikalen Spritzgiessmaschine mit ausreichenden Schliesskräften funktioniert.

Die Einspritzzeit überschneidet sich mit der Schliessbewegung, was die Zykluszeit verkürzt. Die Schmelze kann gegen einen geringeren Widerstand in die Kavitäten gespritzt werden, da die Kerne noch nicht in der Endposition sind. Erst wenn die Kerne durch die verbleibende Schliessbewegung als "Nachdruckfunktion" in ihre Endlage gedrückt werden, entsteht ein gleichmässiger Schmelzedruck in der Kavität.

Es kann davon ausgegangen werden, dass die Schliesskräfte deutlich geringer ausfallen gegenüber dem Stand der Technik, etwa gemäss der WO 2004 / 073953. Untersuchungen zeigten einen Kräftebedarf von nur 5 bis 10 KN / Kavität. Aus dieser Erkenntnis heraus darf angenommen werden, dass das System mit einem Drittel der Schliesskraft auskommt.

Die Schliesskraftreduktion wird auch in der Einspritzphase, die durch die Schliesskräfte initiiert wird, keine Nachteile haben; die Schmelzekammern liegen so dicht an den Kavitäten, dass der Druckbedarf für die Füllphase auf tiefstem Niveau von schätzungsweise 50 bis 200 bar anzunehmen ist.

Auf einen Shot-Pot kann mit der neuen Lösung grundsätzlich verzichtet werden, da die Schmelzespeicherung nun vom Heisskanal übernommen wird. Vorteilhafterweise kann ein wesentlich preiswerterer Extruder in Verbindung mit einem Fi-Fo-Schmelzespeicher eingesetzt werden gemäss Patentanmeldung Nr. 0268/08 vom 25.2.2008. Grundsätzlich wird an beiden Lösungen Energie eingespart, da der Einspritzvorgang nicht mehr durch einen eigenen Antrieb sondern durch die ohnehin vorhandene Schliessbewegung durchgeführt wird. Der Inhalt dieser Anmeldung wird als integrierender Bestandteil der vorliegenden erklärt.

Die Kolbenplatte muss derart gestaltet werden, dass sie mit integrierten Heizpatronen beheizt werden kann. Diese können beispielsweise in den Kolben oder Heizplatten in einer Sandwichbauform angeordnet werden. Es ist ebenso darauf zu achten, dass das Leckagematerial, welches voraussichtlich in Chipform auftritt, an den einzelnen Kolben frei herausfallen kann. Der Reinigungsvorgang liesse sich mit feinen Luftkanälen in den Kolben deutlich verbessern, aus denen in noch festzulegenden Intervallen per Luftstössen das Leckagematerial ausgeblasen werden kann. Die Menge des Leckagematerials wird durch die kleinen zu erwartenden Drücke, wie zuvor beschrieben, ohnehin sehr gering sein. Zudem lässt sich diese Menge durch die Gestaltung des Spaltes zusätzlich konstruktiv bestimmen. Ohne Leckage kann jedoch nicht gearbeitet werden, da das Material zugleich als Schmiermittel wirkt.

Bei Kavitätenschäden kann nach dem Stand der Technik verfahren werden. Die Düsennadel wird in der Position "Düse geschlossen" eingefroren. Dadurch wird das Material für die beschädigte Kavität 60 in der Schmelzekammer im Heisskanal statt in der Kavität 60 wieder in den Heisskanal zurückgedrückt.

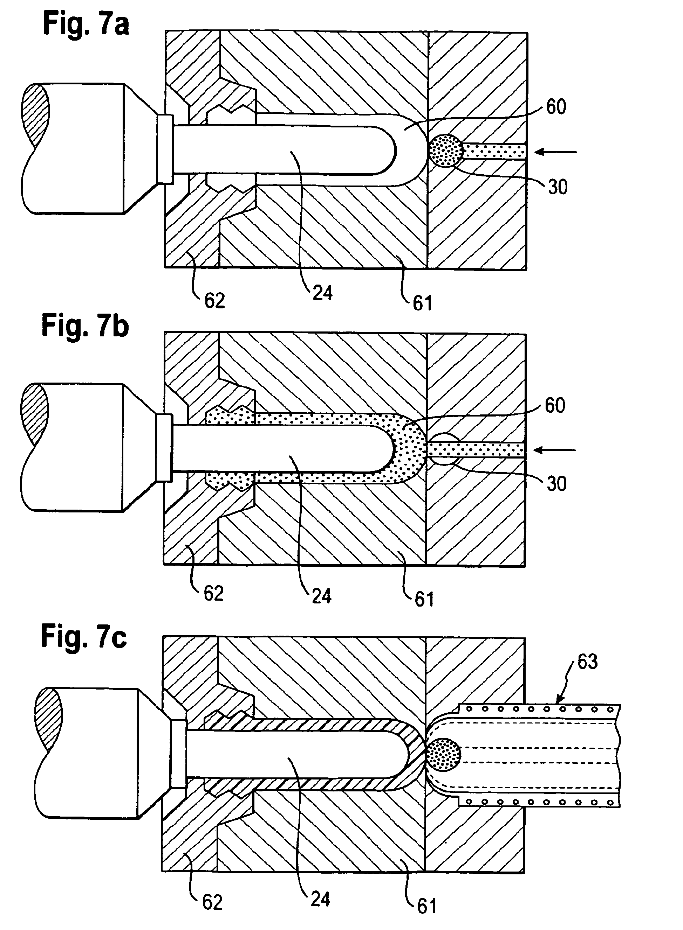

Die Figuren 7a bis 7c zeigen die Dosier- und die Kompressionsphase. In der Figur 7a wird durch ein vorbestimmtes Einfahren des Kerns 24 die Kavität 60 als Dosiervorraum 70 benutzt. Auf der offenen Endseite der Preform 10 wird die Kavität 60 durch den Neckring 62 sowie den Kern 24 im Wesentlichen abgedichtet. Gemäss Figur 7b wird mit einem vorwählbaren Schmelzedruck die Schmelze in die Kavität 60 eingespritzt und bei Dosierende das Ventil 30 geschlossen (Figur 7c). Nun erst beginnt die eigentliche Kompressionsphase, in der der Kern 24 mit voller Verschlusskraft in die Kavität 60 gepresst und die Schmelze verdichtet wird.

## Patentansprüche

1. Kompressionsspritzgiess-Verfahren für Preformen (10) mittels einer Spritzgiessmaschine, einer beweglichen und einer feststehenden Werkzeugträgerplatte (2, 5) und einem Werkzeug mit einer Vielzahl von Formnestern bzw. Kavitäten (60), wobei
- die bewegliche Formhälfte (8) mit Kernen (24) ausgebildet ist und die Schmelze auf der Seite der feststehenden Werkzeugträgerplatte über gesteuerte Ventile dosiert in die Kavitäten (60) eingebracht wird,
- für jeden Schuss eine vordosierte Schmelzemenge in je einem Dosiervorraum (70) vor jedem einzelnen Formnest bzw. vor jeder Kavität (60) vorbereitet wird und
- die vordosierte Schmelzemenge zeitgleich in alle Formnester eindosiert wird,
**dadurch gekennzeichnet,**
**dass** die Schließkraft den benötigten Druck zum Einspritzen der Schmelze in die Kavitäten generiert und sich die Einspritzzeit mit der Schließbewegung überschneidet.

2. Kompressionsspritzgiess-Verfahren nach Anspruch 1,
**dadurch gekennzeichnet,**
**dass** das Einbringen der Schmelze in die Kavitäten überschneidend mit der Einfahrbewegung der Kerne in die Kavitäten gesteuert wird.

3. Kompressionsspritzgiess-Verfahren nach Anspruch 1 oder 2,
**dadurch gekennzeichnet,**
**dass** die einzelnen Vorräume (70) als Dosierzylinder ausgebildet sind, in denen sich je ein Ausstosskolben für die Dosierung relativ bewegt, wobei die Ausstosskolben auf einer gemeinsamen Kolbenplatte angeordnet sind und gemeinsam angetrieben werden, sodass die vorbereitete Schmelze zeitgleich in alle Formnester bzw. Kavitäten (60) eingebracht wird.

4. Kompressionsspritzgiess-Verfahren nach einem der Ansprüche 1 bis 3,
**dadurch gekennzeichnet,**
**dass** die Dosiermenge durch ein jedem Dosiervorraum (70) zugeordnetes Doppelventil mitbestimmt wird, welches über eine gesteuerte Bewegung wechselweise einerseits ein Einspritzventil in das Formnest bzw. in die Kavität (60) und andererseits ein Ventil den Eingang zum Dosiervorraum (70) zyklisch öffnet und schliesst.

5. Kompressionsspritzgiess-Verfahren nach einem der Ansprüche 1 bis 4,
**dadurch gekennzeichnet,**
**dass** jedem Dosiervorraum (70) ein Schrumpfausgleichsraum (75) vorgelagert ist, wobei zumindest während der ersten Schrumpfphase das Einspritzventil in das Formnest offen bleibt, sodass für die Schrumpfung der Preform (10) Schmelze aus dem Schrumpfausgleichsraum (75) in jedes Formnest (60) nachströmen kann.

6. Kompressionsspritzgiess-Verfahren nach einem der Ansprüche 1 bis 4,
**dadurch gekennzeichnet,**
**dass** die exakte Dosiermenge durch eine gesteuerte Linearbewegung der Ausstosskolben in dem Dosiervorraum (70) bestimmt und nach dem Eindosieren das Einspritzventil geschlossen wird.

7. Kompressionsspritzgiess-Verfahren nach einem der Ansprüche 1 bis 4,
**dadurch gekennzeichnet,**
**dass** die exakte Dosierung der Schmelze in dem Formnest bzw. in der Kavität (60) selbst stattfindet, wobei die Kerne (24) entsprechend gesteuert in die Kavitäten (60) eingeschoben werden und nach dem Eindosieren das Einspritzventil geschlossen wird.

8. Kompressionsspritzgiess-Verfahren nach einem der Ansprüche 1 bis 7,
**dadurch gekennzeichnet,**
**dass** vor der Schmelzedosierung die Neckringe (62) auf die Formnester bzw. Kavitäten (60) zubewegt und die Kavitäten (60) ringförmig nach aussen zwischen der Kavität (60) und dem Neckring (62) dicht abgeschlossen werden.

9. Kompressionsspritzgiess-Verfahren nach einem der Ansprüche 1 bis 8, **dadurch gekennzeichnet,**
a) **dass** nach dem Verschliessen der offenen Endseite der Preformen (10) die Kerne (60) in eine gesteuerte Position eingefahren werden und
b) das Werkzeug in eine erste Dosier- bzw. Schussstellung gefahren und die Schmelze eindosiert wird, und
c) der Vorschub der Kerne (24) zur Erzeugung des Kompressionsdruckes freigegeben und der Kompressionsdruck erzeugt wird.

10. Kompressionsspritzgiess-Verfahren nach Anspruch 1,
**dadurch gekennzeichnet,**
a) **dass** vor Beginn der Schmelzeeinspritzung in die Kavitäten (60) die Kerne (24) so weit in die Kavitäten (60) eingedrungen sind, dass die Formnester zumindest im Wesentlichen nach aussen verschlossen sind und die Kavität (60) auf eine Dosierstellung eingestellt wird,
b) **dass** die Schmelze bei noch unvollständig geschlossenen Formen in die Kavitäten (60) eindosiert wird,
c) und **dass** der Kompressionsdruck mittels der Kerne (24) durch das vollständige Formschliessen erzeugt wird.

11. Kompressionsspritzgiess-Verfahren nach einem der Ansprüche 1 bis 10,
**dadurch gekennzeichnet,**
**dass** das Einspritzen der Schmelze in die Kavitäten (60) überschneidend mit der Einfahrbewegung der Kerne (24) in die Kavitäten (60) in einer Dosierstellung der Kavität (60) gesteuert wird.

12. Kompressionsspritzgiess-Verfahren nach einem der Ansprüche 1 bis 11,
**dadurch gekennzeichnet,**
**dass** die Dosiermenge als Funktion eines wählbaren Dosierdruckes und / oder dem Dosiervolumen einstellbar ist, wobei der Dosierdruck vorzugsweise in einem Bereich von 50 bis 200 bar, vorzugsweise im Bereich von 100 bis 150 bar liegt.

13. Kompressionsspritzgiess-Verfahren nach einem der Ansprüche 1 bis 12,
**dadurch gekennzeichnet,**
**dass** mit dem Kompressionsdruck von 200 bis 600 bar und mehr die Schmelze verdichtet wird.

14. Kompressionsspritzgiess-Verfahren nach einem der Ansprüche 1 bis 13,
**dadurch gekennzeichnet,**
**dass** die Formhälfte mit den Formnestern relativ zur feststehenden Werkzeugträgerplatte (2) bzw. mit einer Verteilplatte eines Heisskanal-Systems verschiebbar gelagert ist zur gesteuerten Aktivierung der Ausstosskolben für die Dosierung.

15. Kompressionsspritzgiess-Verfahren nach einem der Ansprüche 1 bis 14,
**dadurch gekennzeichnet,**
**dass** die Kerne (24) einen hinteren zylindrischen Abschnitt aufweisen, derart, dass der zylindrische Abschnitt in einer entsprechenden Bohrung der Neckringe (62) einen Dichtschluss für die Kompressionsphase bilden.

16. Vorrichtung zum Kompressionsspritzgiessen für Preformen (10) mittels einer Spritzgiessmaschine mit einer Schließeinheit umfassend eine beweglichen und eine feststehenden Werkzeugträgerplatte (2, 5) und ein Werkzeug mit einer Vielzahl von Formnestern bzw. Kavitäten (60), wobei die bewegliche Formhälfte (8) mit Kernen (24) ausgebildet ist und die Schmelze auf der Seite der feststehenden Werkzeugträgerplatte (2) über gesteuerte Ventile dosiert in die Kavitäten (60) eingebracht wird, jedem Formnest bzw. jeder Kavität (60) ein Dosiervorraum (70) vorgelagert ist zur zyklischen Vorbereitung und zeitgleichen Einbringung einer vordosierten Schmelzemenge in jedes einzelne Formnest bzw. in jede Kavität (60),
**dadurch gekennzeichnet,**
**dass** die Kerne (24) über einen Formschluss derart angetrieben sind, dass die Schließkraft den benötigten Druck zum Einspritzen der Schmelze in die Kavitäten generiert und die Schließeinheit derart ausgebildet ist, dass sich die Einspritzzeit mit der Schließbewegung überschneidet.

17. Vorrichtung nach Anspruch 16,
**dadurch gekennzeichnet,**
**dass** jedem Dosiervorraum (70) ein Doppelventil zugeordnet ist, einerseits zur wechselweisen Steuerung des Schmelzeeingangs in den Dosiervorraum (70), und andererseits des in das Formnest (60) mündende Einspritzventil.

18. Vorrichtung nach Anspruch 16 oder 17,
**dadurch gekennzeichnet,**
**dass** alle Dosiervorräume (70) als Dosierzylinder ausgebildet sind, in welchen eine gemeinsame Kolbenplatte mit entsprechender Anzahl Ausstosskolben koordiniert steuerbar und relativ bewegbar sind.

19. Vorrichtung nach Anspruch 18,
**dadurch gekennzeichnet,**
**dass** die bewegbare Kolbenplatte ein integrierender Bestandteil der bewegbaren Formhälfte (8) ist.

20. Vorrichtung nach einem der Ansprüche 16 bis 19,
**dadurch gekennzeichnet,**
**dass** die Formhälfte mit den Formnestern bzw. Kavitäten (60) relativ zur feststehenden Werkzeugträgerplatte (2) bzw. mit einer Verteilplatte eines Heisskanal-Systems verschiebbar gelagert ist.

21. Vorrichtung nach einem der Ansprüche 16 bis 20,
**dadurch gekennzeichnet,**
**dass** zwischen der Formhälfte mit den Kernen (24) und der Kolbenplatte eine vorzugsweise einstellbare Dämpfung, beispielsweise eine Öldrossel, angeordnet ist, derart, dass beide auf einem Teil des Weges gemeinsam und unabhängig voneinander verfahrbar sind.

22. Vorrichtung nach einem der Ansprüche 16 bis 21,
**dadurch gekennzeichnet,**
**dass** die Kolbenplatte mit je einem Ausstosskolben für jeden Dosiervorraum (70) relativ zu den Kavitäten (60) bewegbar ist, derart, dass die Schmelze identisch und zeitgleich in alle Formnester bzw. Kavitäten (60) einbringbar ist.

23. Vorrichtung nach einem der Ansprüche 16 bis 22,
**dadurch gekennzeichnet,**
**dass** sie Steuermittel aufweist zur Vorbestimmung zumindest eines angenäherten Formnestdosiervolumens sowie eines Dosierdruckes in den Formnestern bzw. Kavitäten (60).

24. Vorrichtung nach einem der Ansprüche 16 bis 23,
**dadurch gekennzeichnet,**
**dass** jedem Dosiervorraum (70) ein Schrumpfausgleichsraum (75) vorgelagert ist.

25. Vorrichtung nach Anspruch 24,
**dadurch gekennzeichnet,**
**dass** das Doppelventil den Eingang von der Schmelzezuführleitung in den Schrumpfausgleichsraum (75) öffnet und schliesst.

## Claims

1. A compression injection moulding method for preforms (10) by means of an injection moulding machine, one movable and one fixed tool carrier plate (2, 5) and a tool with a plurality of mould nests or respectively cavities (60), wherein
- the movable mould half (8) is constructed with cores (24) and the melt is introduced into the cavities (60) in a dosed manner on the side of the fixed tool carrier plate via controlled valves,
- for every injection shot, a pre-dosed melt quantity is prepared in each case in a dosing pre-chamber (70) before every individual mould next or respectively before every cavity (60) and
- the pre-dosed melt quantity is dosed into all mould nests simultaneously,
**characterized in that**
the closing force generates the necessary pressure for injecting the melt into the cavities and the injection time overlaps with the closing movement.

2. The compression injection moulding method according to Claim 1,
**characterized in that**
the introduction of the melt into the cavities is controlled in an overlapping manner with the insertion movement of the cores into the cavities.

3. The compression injection moulding method according to Claim 1 or 2,
**characterized in that**
the individual pre-chambers (70) are constructed as dosing cylinders in which in each case an ejector piston moves in a relative manner for the dosing, wherein the ejector pistons are arranged on a shared piston plate and are driven jointly, so that the prepared melt is introduced into all the mould nests or respectively cavities (60) simultaneously.

4. The compression injection moulding method according to Claims 1 to 3,
**characterized in that**
the dosing quantity is co-determined by a double valve assigned to each dosing pre-chamber (70), which double valve, by means of a controlled movement, alternately opens and closes an injection valve into the mould nest or respectively cavity (60), on the one hand, and a valve to the inlet to the dosing pre-chamber (70) on the other hand, in a cyclical manner.

5. The compression injection moulding method according to one of Claims 1 to 4,
**characterized in that**
a shrinkage compensation space (75) is arranged upstream of each dosing pre-chamber (70), wherein the injection valve into the mould nest remains open at least during the first shrinkage phase, so that melt can subsequently flow from the shrinkage compensation space (75) into each mould nest (60) for the shrinkage of the preform (10).

6. The compression injection moulding method according to one of Claims 1 to 4,
**characterized in that**
the exact dosing quantity is determined by a controlled linear movement of the ejector pistons in the dosing pre-chamber (70) and the injection valve is closed after the dose has been introduced.

7. The compression injection moulding method according to one of Claims 1 to 4,
**characterized in that**
the exact dosing of the melt takes place in the mould nest or respectively in the cavity (60) itself, wherein the cores (24) are inserted into the cavities (60) in a correspondingly controlled manner, and the injection valve is closed after the dose has been introduced.

8. The compression injection moulding method according to one of Claims 1 to 7,
**characterized in that**
prior to the melt dosing process, the neck rings (62) are moved toward the mould nests or respectively cavities (60) and the cavities (70) are closed off in a sealed manner toward the exterior in a ring-shaped manner between the cavity (60) and the neck ring (62).

9. The compression injection moulding method according to one of Claims 1 to 8,
**characterized in that**
a) after the open end side of the preforms (10) has been closed, the cores (60) are inserted into a controlled position and
b) the tool is moved into a first dosing or respectively injection position and the melt is dosed in, and
c) the feed of the cores (24) for producing the compression pressure is released and the compression pressure is generated.

10. The compression injection moulding method according to Claim 1,
**characterized in that**
a) prior to the start of the melt injection into the cavities (60), the cores (24) have penetrated so far into the cavities (60) that the mould nests are at least substantially closed off toward the exterior, and the cavity (60) is set to a dosing position.
b) the melt is dosed into the cavities (60) with the moulds being still incompletely closed,
c) and the compression pressure is produced by means of the cores (24) by the complete closure of the moulds.

11. The compression injection moulding method according to one of Claims 1 to 10,
**characterized in that**
the injecting of the melt into the cavities (60) is controlled in an overlapping manner with the insertion movement of the cores (24) into the cavities (60) in a dosing position of the cavity (60).

12. The compression injection moulding method according to one of Claims 1 to 11,
**characterized in that**
the dosing quantity can be set as a function of a selectable dosing pressure and/or the dosing volume, wherein the dosing pressure is preferably in a range of 50 to 200 bar, preferably in the range of 100 to 150 bar.

13. The compression injection moulding method according to one of Claims 1 to 12,
**characterized in that**
the melt is compacted with the compression pressure of 200 to 600 bar and more.

14. The compression injection moulding method according to one of Claims 1 to 13,
**characterized in that**
the mould half with the mould nests is mounted displaceably relative to the fixed tool carrier plate (2) or respectively with a distribution plate of a hot runner system, for the controlled activation of the ejector pistons for the dosing.

15. The compression injection moulding method according to one of Claims 1 to 14,
**characterized in that**
the cores (24) have a rear cylindrical section such that the cylindrical section forms a sealing closure for the compression phase in a corresponding bore of the neck rings (62).

16. A device for the compression injection moulding for preforms (10) by means of an injection moulding machine with a closure unit comprising one movable and one fixed tool carrier plate (2, 5) and a tool with a plurality of mould nests or respectively cavities (60), wherein the movable mould half (8) is constructed with cores (24) and the melt is introduced in a dosed manner into the cavities (60) on the side of the fixed tool carrier plate (2) via controlled valves, with a dosing pre-chamber (70) being arranged upstream of every mould nest or respectively every cavity (60) for the cyclical preparation and simultaneous introduction of a pre-dosed melt quantity into each individual mould nest or respectively into each cavity (60),
**characterized in that**
the cores (24) are driven via a mould closure in such a way that the closing force generates the necessary pressure for injecting the melt into the cavities and the closing unit is constructed such that the injection time overlaps with the closing movement.

17. The device according to Claim 16,
**characterized in that**
a double valve is assigned to each dosing pre-chamber (70), for alternately controlling the melt entry into the dosing pre-chamber (70), on the one hand, and on the other hand the injection valve opening into the mould nest (60).

18. The device according to Claim 16 or 17,
**characterized in that**
all dosing pre-chambers (70) are constructed as dosing cylinders in which a shared piston plate with a corresponding number of ejector pistons can be controlled in a coordinated manner and moved in a relative manner.

19. The device according to Claim 18,
**characterized in that**
the movable piston plate is an integrating component of the movable mould half (8).

20. The device according to one of Claims 16 to 19,
**characterized in that**
the mould half with the mould nests or respectively cavities (60) is mounted displaceably relative to the fixed tool carrier plate (2) or respectively with a distributor plate of a hot runner system.

21. The device according to one of Claims 16 to 20,
**characterized in that**
a preferably adjustable damping, for example an oil throttle, is arranged between the mould half with the cores (24) and the piston plate such that both can be moved jointly and independently of one another on a portion of the path.

22. The device according to one of Claims 16 to 21,
**characterized in that**
the piston plate with in each case an ejector piston for each dosing pre-chamber (70) is movable relative to the cavities (60), such that the melt is able to be introduced into all the mould nests or respectively cavities (60) in an identical and simultaneous manner.

23. The device according to one of Claims 16 to 22,
**characterized in that**
it has control means to predetermine at least an approximate mould nest dosing volume and a dosing pressure in the mould nests or respectively cavities (60).

24. The device according to one of Claims 16 to 23,
**characterized in that**
a shrinkage compensation space (75) is arranged upstream of each dosing pre-chamber (70).

25. The device according to Claim 24,
**characterized in that**
the double valve opens and closes the entry from the melt supply line into the shrinkage compensation space (75).

## Revendications

1. Procédé de moulage par injection-compression de préformes (10) via une machine de moulage par injection, des plaques porte-outil mobile et fixe (2, 5) et un outil comprenant une pluralité de cavités (60), sachant que
- la moitié de moule mobile (8) est formée avec des noyaux (24) et la masse fondue est introduite dans les cavités (60) sur le côté de la plaque porteuse fixe, en étant dosée par des soupapes commandées,
- pour chaque injection, une quantité de masse fondue prédosée est préparée dans une antichambre de dosage (70) respective avant chaque cavité (60) individuelle et
- la quantité de masse fondue prédosée est dosée en même temps dans toutes les cavités,
**caractérisé en ce que**
la force de fermeture génère la pression nécessaire pour injecter la masse fondue dans les cavités et le temps d'injection coïncide avec le mouvement de fermeture.

2. Procédé de moulage par injection-compression selon la revendication 1, **caractérisé en ce que** l'introduction de la masse fondue dans les cavités est commandée en coïncidant avec le mouvement de rentrée des noyaux dans les cavités.

3. Procédé de moulage par injection-compression selon la revendication 1 ou 2, **caractérisé en ce que** les antichambres (70) individuelles sont conçues en tant que cylindres de dosage dans lesquels un piston d'éjection respectif se déplace de manière relative pour le dosage, sachant que les pistons d'éjection sont disposés sur une plaque de pistons commune et sont entraînés ensemble, de telle sorte que la masse fondue préparée est introduite en même temps dans toutes les cavités (60).

4. Procédé de moulage par injection-compression selon l'une des revendications 1 à 3, **caractérisé en ce que** la quantité de dosage est co-déterminée par une double soupape attribuée à chaque antichambre de dosage (70), laquelle, ouvre ou ferme réciproquement de manière cyclique via un mouvement commandé, d'une part une soupape d'injection dans la cavité (60) et d'autre part une soupape dans l'entrée vers l'antichambre de dosage (70).

5. Procédé de moulage par injection-compression selon l'une des revendications 1 à 4, **caractérisé en ce qu'**un espace de compensation de rétrécissement (75) est placé devant chaque antichambre de dosage (70), sachant qu'au moins pendant la première phase de rétrécissement, la soupape d'injection reste ouverte dans la cavité, de telle sorte que pour le rétrécissement de la préforme (10), de la masse fondue hors de l'espace de compensation de rétrécissement (75) peut retourner dans chaque cavité (60).

6. Procédé de moulage par injection-compression selon l'une des revendications 1 à 4, **caractérisé en ce que** la quantité exacte de dosage est définie par un mouvement linéaire commandé du piston d'éjection dans l'antichambre de dosage (70) et que la soupape d'injection est fermée après le dosage.

7. Procédé de moulage par injection-compression selon l'une des revendications 1 à 4, **caractérisé en ce que** le dosage exact de la masse fondue a lieu dans la cavité (60) elle-même, sachant que les noyaux (24) sont poussés dans les cavités (60) en étant commandés de manière correspondante et que la soupape d'injection est fermée après le dosage.

8. Procédé de moulage par injection-compression selon l'une des revendications 1 à 7, **caractérisé en ce qu'**avant le dosage de masse fondue, les bagues de col (62) sont approchées sur les cavités (60) et les cavités (60) sont fermées de manière étanche en forme de bague vers l'extérieur entre la cavité (60) et la bague de col (62).

9. Procédé de moulage par injection-compression selon l'une des revendications 1 à 8, **caractérisé en ce**
a) **qu'**après la fermeture du côté d'extrémité ouvert des préformes (10), les noyaux (60) sont entrés dans une position commandée et
b) l'outil est dirigé dans une première position de dosage, respectivement d'injection, et la masse fondue est dosée, et
c) l'avancée des noyaux (24) est déclenchée pour produire la pression de compression et la pression de compression est produite.

10. Procédé de moulage par injection-compression selon la revendication 1, **caractérisé en ce**
a) **qu'**avant le début de l'injection de masse fondue dans les cavités (60), les noyaux (24) sont forcés assez loin dans les cavités (60) pour permettre que les cavités soient au moins fermées essentiellement vers l'extérieur et la cavité (60) est réglée à une position de dosage,
b) **que** la masse fondue est dosée dans les cavités (60) alors que les formes ne sont pas encore totalement fermées,
c) et **que** la pression de compression est produite via les noyaux (24) par la fermeture complète du moule.

11. Procédé de moulage par injection-compression selon l'une des revendications 1 à 10, **caractérisé en ce que** l'injection de la masse fondue dans les cavités (60) est commandée en coïncidant avec le mouvement de rentrée des noyaux (24) dans les cavités (60) dans une position de dosage de la cavité (60).

12. Procédé de moulage par injection-compression selon l'une des revendications 1 à 11, **caractérisé en ce que** la quantité de dosage peut être réglée en fonction d'une pression de dosage pouvant être choisie et / ou du volume de dosage.

13. Procédé de moulage par injection-compression selon l'une des revendications 1 à 12, **caractérisé en ce que** la masse fondue est comprimée à une pression de compression de 200 à 600 bar et plus.

14. Procédé de moulage par injection-compression selon l'une des revendications 1 à 13, **caractérisé en ce que** la moitié de moule avec les cavités est disposée en pouvant être déplacée par rapport à la plaque porte-outil fixe (2), respectivement avec une plaque de distribution d'un système de canal chauffant pour l'activation commandée du piston d'injection pour le dosage.

15. Procédé de moulage par injection-compression selon l'une des revendications 1 à 14, **caractérisé en ce que** les noyaux (24) présentent une section cylindrique arrière, de telle sorte que la section cylindrique forme une fermeture étanche pour la phase de compression dans un alésage correspondant des bagues de col (62).

16. Dispositif de moulage par injection-compression de préformes (10) via une machine de moulage par injection avec une unité de fermeture comprenant des plaques porte-outil mobile et fixe (2, 5) et un outil comprenant une pluralité de cavités (60), sachant que la moitié de moule mobile (8) est formée avec des noyaux (24) et la masse fondue est introduite dans les cavités (60) sur le côté de la plaque porteuse fixe (2), en étant dosée par des soupapes commandées, une antichambre de dosage (70) est disposée avant chaque cavité (60) pour la préparation cyclique et l'introduction simultanée d'une quantité de masse fondue prédosée dans chaque cavité (60) individuelle,
**caractérisé en ce que** les noyaux (24) sont ainsi entraînés via une fermeture du moule que la force de fermeture génère la pression nécessaire pour injecter la masse fondue dans les cavités et l'unité de fermeture est ainsi conçue que le temps d'injection coïncide avec le mouvement de fermeture.

17. Dispositif selon la revendications 16, **caractérisé en ce qu'**une double soupape est attribuée à chaque antichambre de dosage (70), d'une part pour la commande réciproque de l'entrée de la masse fondue dans l'antichambre de dosage (70), et d'autre part de la soupape d'injection débouchant dans la cavité (60).

18. Dispositif selon la revendications 16 ou 17, **caractérisé en ce que** toutes les antichambres de dosage (70) sont formées en tant que cylindres de dosage dans lesquels des plaques de piston communes avec un nombre correspondant de pistons d'éjection peuvent être commandées de manière coordonnée et sont mobiles l'une par rapport à l'autre.

19. Dispositif selon la revendications 18, **caractérisé en ce que** la plaque de piston mobile fait partie intégrante de la moitié de moule mobile (8).

20. Dispositif selon l'une des revendications 16 à 19, **caractérisé en ce que** la moitié de moule avec les cavités (60) est disposée en pouvant être déplacée par rapport à la plaque porte-outil fixe (2), respectivement avec une plaque de distribution d'un système de canal chauffant.

21. Dispositif selon l'une des revendications 16 à 20, **caractérisé en ce qu'**un amortissement de préférence réglable, par exemple un restricteur d'huile, est disposé entre la moitié de moule avec les noyaux (24) et la plaque de piston, de telle sorte que tous deux peuvent être déplacés ensemble et indépendamment l'un de l'autre sur une partie du trajet.

22. Dispositif selon l'une des revendications 16 à 21, **caractérisé en ce que** la plaque de piston peut être déplacée avec un piston d'éjection respectif pour chaque antichambre de dosage (70) par rapport aux cavités (60), de telle sorte que la masse fondue peut être intégrée de manière identique et simultanément dans toutes les cavités (60).

23. Dispositif selon l'une des revendications 16 à 22, **caractérisé en ce qu'**il présente des moyens de commande pour prédéterminer au moins un volume de dosage de cavité approximé ainsi qu'une pression de dosage dans les cavités (60).

24. Dispositif selon l'une des revendications 16 à 23, **caractérisé en ce qu'**un espace de compensation de rétrécissement (75) est placé devant chaque antichambre de dosage (70).

25. Dispositif selon la revendication 24, **caractérisé en ce que** la soupape double ouvre et ferme l'entrée de la ligne d'alimentation de masse fondue dans l'espace de compensation de rétrécissement (75).
